# EUROPEAN PATENT APPLICATION

(11) **EP 4 235 128 A1**
(43) Date of publication of application: **30.08.2023**
(21) Application number: 23158625.6
(22) Date of filing: 24.02.2023
(51) Int. Cl.: G01L 3/14

(54) **TORQUE SENSOR**

(30) Priority: 28.02.2022 JP 2022029046
(71) Applicant: NAGANO KEIKI CO., LTD., Tokyo 143-8544 (JP)
(72) Inventor: MIYASHITA, Kaori, Tokyo 143-8544 (JP); TAKAMATSU, Haruhiko, Tokyo 143-8544 (JP); SUZUKI, Toshinori, Tokyo 143-8544 (JP); ISEI, Yuuta, Tokyo 143-8544 (JP)
(74) Representative: Page White Farrer

(57) **Abstract**

A torque sensor (1) includes: a first area (2) having a first surface (21) and a second surface (22) opposite the first surface (21); a second area (3) provided around the first area (2); a plurality of beams connecting the first area (2) to the second area (3); and a detector provided on the first surface (21) of the first area (2) and configured to detect torque applied between the first area (2) and the second area (3). The detector includes: an insulation film (51) layered on the first area (2); and strain gauges layered on the insulation film (51) and being deformable in response to torque. The second surface (22) of the first area (2) is provided with screw holes (23) that do not reach the first surface (21) and into which fasteners are respectively screwed. A thickness (H) defined between a bottom of each of the screw holes (23) and the first surface (21) is equal to or more than one fourth of a diameter (M) of each of the screw holes (23).

## Description

### TECHNICAL FIELD

The present invention relates to a torque sensor.

### BACKGROUND ART

Torque sensors used in a joint portion or the like of a robot have been typically known (see, for instance, Patent Literature 1 (International Publication No. WO2021/117855)).

In Patent Literature 1, an insulation film is layered on a first area provided on an inner side of a second area, and strain gauges are layered on the insulation film. With this arrangement, no insulation film is required for beams connecting the first area to the second area, simplifying a formation step of the insulation film.

In Patent Literature 1, screw holes are provided in the first area where the strain gauge is disposed. Upon screwing of fasteners (e.g., bolts) into the screw holes, the strain gauge adversely detects strain caused by the screwing of the fasteners, thereby lowering an accuracy of detecting torque applied on a strain generation body.

### SUMMARY OF THE INVENTION

An object of the invention is to provide a torque sensor whose detection accuracy can be inhibited from decreasing.

According to an aspect of the invention, a torque sensor includes: a first area comprising a first surface and a second surface opposite the first surface; a second area provided around the first area or on an inner side of the first area; a plurality of beams connecting the first area to the second area; and a detector provided on the first surface of the first area and configured to detect torque applied between the first area and the second area, in which the detector comprises: an insulation film layered on the first area; and strain gauges layered on the insulation film and being deformable in response to the torque, the second surface of the first area is provided with screw holes that do not reach the first surface and into which fasteners are respectively screwed, and a thickness defined between a bottom of each of the screw holes and the first surface is equal to or more than one fourth of a diameter of each of the screw holes.

In the above aspect of the invention, the second surface of the first area is provided with the screw holes that do not reach the first surface where the detector is provided. The fasteners are screwed into the screw holes. The thickness defined between the bottom of each of the screw holes and the first surface is equal to or more than one fourth of the diameter of each of the screw holes. This makes it possible for strain caused by screwing the fasteners into the screw holes not to be easily transmitted to the detector upon the screwing of the fasteners into the respective screw holes. Therefore, even with the arrangement in which the first area has the screw holes, the detection accuracy of torque can be inhibited from decreasing.

In the torque sensor according to the above aspect of the invention, it is preferable that the thickness defined between the bottom of each of the screw holes and the first surface is equal to or more than a half of the diameter of each of the screw holes.

In this arrangement, since the thickness defined between the bottom of each of the screw holes and the first surface is equal to or more than a half of the diameter of each of the screw holes, a decrease in the detection accuracy of torque can be reliably inhibited even with the arrangement in which the first area has the screw holes.

According to another aspect of the invention, a torque sensor includes: a first area comprising a first surface and a second surface opposite the first surface; a second area provided around the first area or on an inner side of the first area; a plurality of beams connecting the first area to the second area; and a detector provided on the first surface of the first area and configured to detect torque applied between the first area and the second area, in which the detector comprises: an insulation film layered on the first area; and strain gauges layered on the insulation film and being deformable in response to the torque, the second surface of the first area is provided with screw holes into which fasteners are respectively screwed, and a distance in an extension direction of the first surface between each of the strain gauges and a periphery of the corresponding one of the screw holes is equal to or more than a half of a diameter of each of the screw holes.

In the above aspect of the invention, the second surface of the first area is provided with the screw holes into which the fasteners are respectively screwed. The distance in the extension direction of the first surface between each of the strain gauges and the periphery of the corresponding one of the screw holes is equal to or more than the half of the diameter of each of the screw holes. This makes it possible for strain caused by screwing the fasteners into the respective screw holes not to be easily transmitted to the detector upon the screwing of the fasteners into the respective screw holes. Therefore, even with the arrangement in which the first area has the screw holes, the detection accuracy of torque can be inhibited from decreasing.

In the torque sensor according to the above aspect of the invention, it is preferable that the distance in the extension direction of the first surface between each of the strain gauges and the periphery of the corresponding one of the screw holes is equal to or more than the diameter of each of the screw holes.

In this arrangement, since the distance in the extension direction of the first surface between each of the strain gauges and the periphery of the corresponding one of the screw holes is equal to or more than the diameter of each of the screw holes, a decrease in the detection accuracy of torque can be more reliably inhibited even with the arrangement in which the first area has the screw holes.

In the torque sensor according to the above aspect of the invention, it is preferable that the number of the screw holes is an integral multiple of the number of the beams, and the screw holes are arranged symmetrically to the beams in a plan view.

In this arrangement, since the screw holes are arranged symmetrically to the beams in a plan view, local strain generation to be caused by screwing of the fasteners into the respective screw holes can be inhibited when the fasteners are screwed into the screw holes.

### BRIEF EXPLANATION OF DRAWINGS

Fig. 1 is a plan view schematically showing a torque sensor according to a first exemplary embodiment of the invention.
Fig. 2 is a plan view schematically showing the torque sensor viewed from an opposite side to a side shown in Fig. 1.
Fig. 3 is a cross-sectional view schematically showing the torque sensor cut along a III-III line in Fig. 1.
Fig. 4 shows a relationship between H/M and a zero point change rate.
Fig. 5 is a plan view schematically showing a torque sensor according to a second exemplary embodiment.
Fig. 6 is a plan view schematically showing the torque sensor viewed from an opposite side to a side shown in Fig. 5.
Fig. 7 is a cross-sectional view schematically showing the torque sensor cut along a VII-VII line in Fig. 5.
Fig. 8 shows a relationship between L/M and the zero point change rate.

### DESCRIPTION OF EMBODIMENT(S)

### First Exemplary Embodiment

A torque sensor 1 of a first exemplary embodiment of the invention will be described below with reference to the attached drawings.

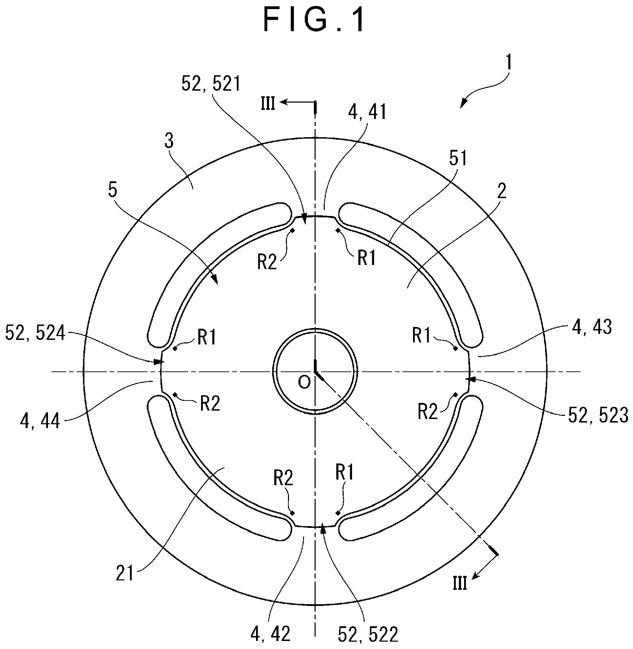

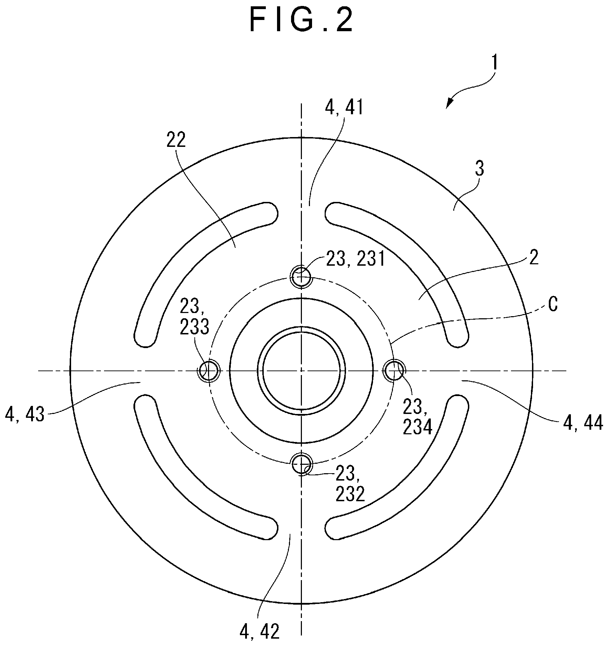

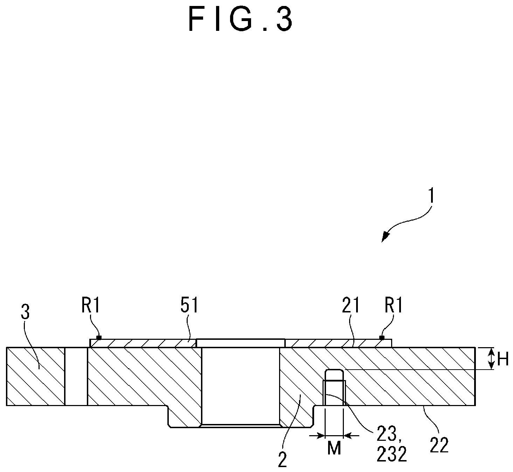

Fig. 1 is a plan view schematically showing a torque sensor 1 of the exemplary embodiment. Fig. 2 is a plan view schematically showing the torque sensor 1 viewed from an opposite side to a side shown in Fig. 1. Fig. 3 is a cross-sectional view schematically showing the torque sensor 1 cut along a III-III line in Fig. 1. The torque sensor 1 of the exemplary embodiment, which is installed at a joint portion or the like of a robot, is configured to detect torque applied between a first area 2 and a second area 3.

As shown in Figs. 1 to 3, the torque sensor 1 includes the first area 2, the second area 3, beams 4, and a detector 5.

### First Area 2

The first area 2 is a metallic annular part. In the exemplary embodiment, the first area 2 is connected to, for instance, an output shaft of a drive unit such as a motor. Thus, the torque generated by the drive unit such as a motor is transmissible to the first area 2.

The first area 2 has a first surface 21 and a second surface 22 opposite the first surface 21. A detector 5 is provided on the first surface 21 of the first area 2.

Further, a conductor, an electrode and the like (not shown) are provided on the first surface 21 of the first area 2.

The second surface 22 of the first area 2 is provided with screw holes 23 that do not reach the first surface 21. In the exemplary embodiment, four screw holes 23, namely, a first screw hole 231, a second screw hole 232, a third screw hole 233, and a fourth screw hole 234 are formed. Fasteners such as bolts can be screwed into the respective screw holes 231, 232, 233, and 234. In other words, an inner circumferential surface of each of the screw holes 231, 232, 233, and 234 is threaded. The torque sensor 1 is thus fixable to a fixed component or the like by screwing the fasteners (e.g., bolts) into the respective screw holes 23.

In the exemplary embodiment, the screw holes 231, 232, 233, and 234 are arranged symmetrically to the beams 4 in a plan view.

Specifically, with respect to a center O, the first screw hole 231 is located at a position corresponding to a first beam 41 described later, the second screw hole 232 is located at a position corresponding to a second beam 42 described later, the third screw hole 233 is located at a position corresponding to a third beam 43 described later, and the fourth screw hole 234 is located at a position corresponding to a fourth beam 44 described later. In the exemplary embodiment, the screw holes 231, 232, 233, and 234 are arranged at regular intervals on an imaginary circle C centered at the center O.

### Second Area 3

The second area 3 is a metallic annular part, which is located around the first area 2 in a plan view. In the exemplary embodiment, the second area 3 is concentric with the first area 2. The second area 3 is connected to the first area 2 by the beams 4. The second area 3 is fixed to a fixed component or the like by the fasteners (e.g., bolts).

The beams 4 are components interposed between an outer periphery of the first area 2 and an inner periphery of the second area 3 and connecting the first area 2 to the second area 3. Therefore, when torque generated by a drive unit has been transmitted to the first area 2, the beams 4 transmit the torque to the second area 3. In the exemplary embodiment, since the second area 3 is fixed to a fixed component, the torque being transmitted from the first area 2 to the second area 3 is applied on the beams 4. For this reason, the beams 4 are easily strained by the torque.

In the exemplary embodiment, the beams 4 are provided by a metallic plate member integrally with the first area 2 and the second area 3. Specifically, the first area 2, the second area 3, and the beams 4 of the exemplary embodiment are formed by subjecting the metallic plate member to metalworking. The metallic plate member is of a thickness capable of being flexed.

In the exemplary embodiment, the beams 4 include four beams, namely, the first beam 41, the second beam 42, the third beam 43, and the fourth beam 44 as described above.

Each of the beams 41, 42, 43, and 44 faces the corresponding paired one of the beams 41, 42, 43, 44 across the first area 2. Specifically, the first beam 41 and the second beam 42 as a pair are located at opposite positions across the first area 2 (i.e. on a common diametral line of a circle defining the first area 2). Further, the third beam 43 and the fourth beam 44 as a pair are located at opposite positions across the first area 2 (i.e. on another common diametral line of the circle defining the first area 2).

In the exemplary embodiment, an end near the first area 2 and an end near the second area 3 of each of the beams 41, 42, 43, and 44 are wider than a center portion thereof. When torque is applied on each of the beams 41, 42, 43, and 44, stress is likely to concentrate on the ends thereof. In the exemplary embodiment, the ends of each of the beams 41, 42, 43, and 44 are wide, making it possible to inhibit the beams 41, 42, 43, and 44 from being damaged by the torque.

### Detector 5

A detector 5 includes an insulation film 51 and strain gauges 52.

The insulation film 51 is layered to cover substantially an entire surface of the first area 2. The insulation film 51 is a film for insulating the strain gauges 52, the conductor and the like (not shown) from the first area 2.

The insulation film 51 of the exemplary embodiment includes a plurality of layers. Specifically, the insulation film 51 includes, for instance, a layer made using an insulative glass material and a layer made using an insulative resin. This makes it possible to easily adjust the thickness of the insulation film 51 of the exemplary embodiment.

The strain gauges 52 are layered on the insulation film 51 at positions corresponding to the above-described beams 41, 42, 43, and 44, respectively. The strain gauges 52 include four strain gauges, namely, a first strain gauge 521, a second strain gauge 522, a third strain gauge 523, and a fourth strain gauge 524.

Each of the strain gauges 521, 522, 523 and 524 includes two resistors R1 and R2. The resistors R1, R2 of the exemplary embodiment are formed by printing.

The resistors R1 and R2 of each of the strain gauges 521, 522, 523 and 524 of the exemplary embodiment are provided at positions corresponding to the beams 41, 42, 43 and 44. Specifically, the resistors R1 and R2 are provided on the first area 2 at positions to be connected to an end of each of the beams 41, 42, 43 and 44. With this arrangement, when torque is applied between the first area 2 and the second area 3 and the beams 41, 42, 43 and 44 are strained by the torque, the strain is transmitted to the resistors R1 and R2, causing deformation of the resistors R1 and R2. In other words, the resistors R1 and R2 are deformable in response to the torque applied between the first area 2 and the second area 3.

The resistors R1 and R2 are electrically connected to a circuit board through a conductor and electrodes (not shown) to form a bridge circuit. Specifically, the resistor R1 is connected to a power source potential VDD and the resistor R2 is connected to a ground potential or GND. The strain gauges 521, 522, 523 and 524 are each thus serially connected between the power source potential VDD and the ground potential or GND.

In the exemplary embodiment, the torque sensor 1 is configured to detect torque applied between the first area 2 and the second area 3 by detecting an amount of voltage variation between the resistors R1 and R2 caused by the deformation of the resistors R1, R2 in response to the torque. The detection method of the torque based on the voltage variation between the resistors R1 and R2 is well known, and thus detailed explanation therefor is omitted.

### Forming Method of Screw Holes 23 and Detection Accuracy of Torque

Next, a forming method of the screw holes 23 and detection accuracy of torque will be described.

As described above, the second surface 22 of the first area 2 is provided with the screw holes 231, 232, 233 and 234 that do not reach the first surface 21.

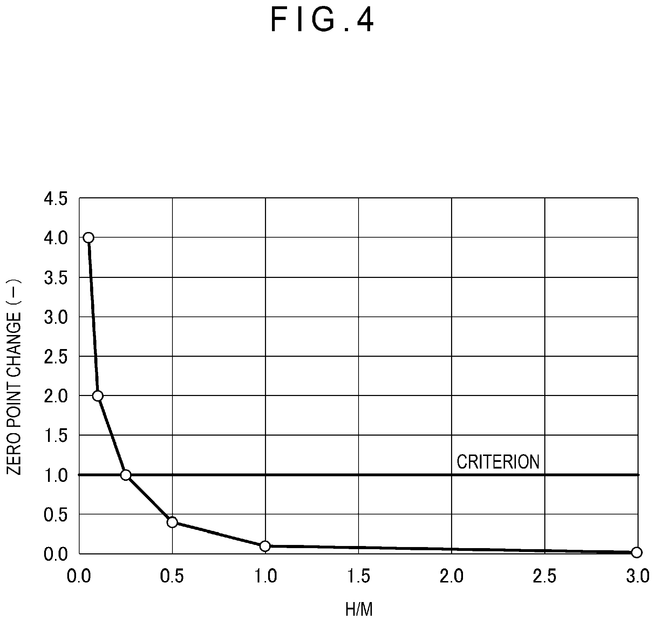

The screw holes 231, 232, 233 and 234 are formed so that a thickness H is equal to or more than one fourth, preferably a half, of a diameter M of each of the screw holes 231, 232, 233 and 234. The thickness H is defined between a bottom of each of the screw holes 231, 232, 233 and 234 and the first surface 21. Fig. 4 shows a relationship between a zero point change rate of the strain gauges 52 and a ratio between the thickness H and the diameter M. The thickness H is defined between the bottom of each of the screw holes 231, 232, 233 and 234 and the first surface 21. The diameter M is of each of the screw holes 231, 232, 233 and 234. It should be noted that Fig. 4 shows the zero point change rate assuming that a criterion is defined as 1. Fig. 4 shows test results of the zero point change rate obtained when bolts have been screwed into the respective screw holes 231, 232, 233 and 234 each having a diameter of about 5 mm.

As shown in Fig. 4, it is suggested that when H/M is smaller than 0.25 (1/4), the zero point change rate of the strain gauges 52 exceeds the criterion upon screwing of fasteners (e.g., bolts) into the respective screw holes 231, 232, 233 and 234. It is suggested that the zero point change rate of the strain gauges can be kept equal to or less than the criterion by rendering H/M equal to or more than 0.25 (1/4) and can be kept lower than the criterion by rendering H/M equal to 0.5 (1/2).

In general, if the zero point change rate of the strain gauges 52 can be kept equal to or less than the criterion when torque is detect using the strain gauges 52, a detection accuracy of the torque using the strain gauges 52 can be kept falling within a required range. Accordingly, it is suggested that a decrease in the detection accuracy of torque, which is caused by screwing the fasteners into the respective screw holes 231, 232, 233 and 234, can be inhibited by rendering H/M equal to or more than 0.25 (1/4), preferably equal to 0.5 (1/2).

In the exemplary embodiment, since the screw holes 231, 232, 233 and 234 are arranged symmetrically to the beams 4 in a plan view as described above, local strain generation to be caused by screwing of the fasteners into the respective screw holes 231, 232, 233 and 234 can be inhibited when the fasteners are screwed into the respective screw holes 231, 232, 233 and 234. Therefore, a decrease in the detection accuracy of torque, which is adversely caused by the local strain generation, can be inhibited.

The following advantages can be achieved by the above-described exemplary embodiment.
(1) In the exemplary embodiment, the second surface 22 of the first area 2 is provided with the screw holes 23 that do not reach the first surface 21 where the detector 5 is provided. The fasteners such as bolts are screwed into the screw holes 23. The thickness H defined between the bottom of each of the screw holes 23 and the first surface 21 is equal to or more than one fourth of the diameter M of each of the screw holes 23. This makes it possible for strain caused by screwing the fasteners into the respective screw holes 23 not to be easily transmitted to the detector 5 upon the screwing of the fasteners into the respective screw holes 23. Therefore, even with the arrangement in which the first area 2 has the screw holes 23, the detection accuracy of torque can be inhibited from decreasing.
(2) In the exemplary embodiment, since the thickness H defined between the bottom of each of the screw holes 23 and the first surface 21 is preferably equal to or more than a half of the diameter M of each of the screw holes 23, a decrease in the detection accuracy of torque can be reliably inhibited.

In the exemplary embodiment, since the screw holes 231, 232, 233 and 234 are arranged symmetrically to the beams 4 in a plan view, local strain generation to be caused by screwing of the fasteners into the respective screw holes 231, 232, 233 and 234 can be inhibited.

### Second Exemplary Embodiment

Next, a second exemplary embodiment of the invention will be described below with reference to the attached drawings.

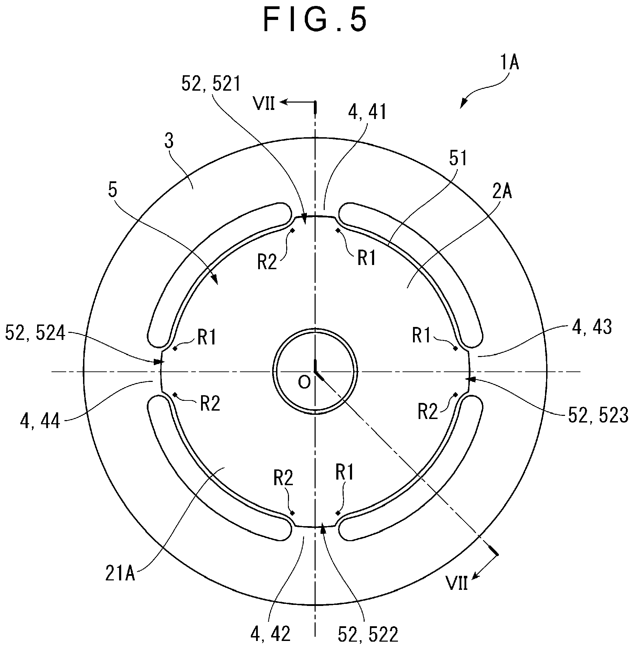

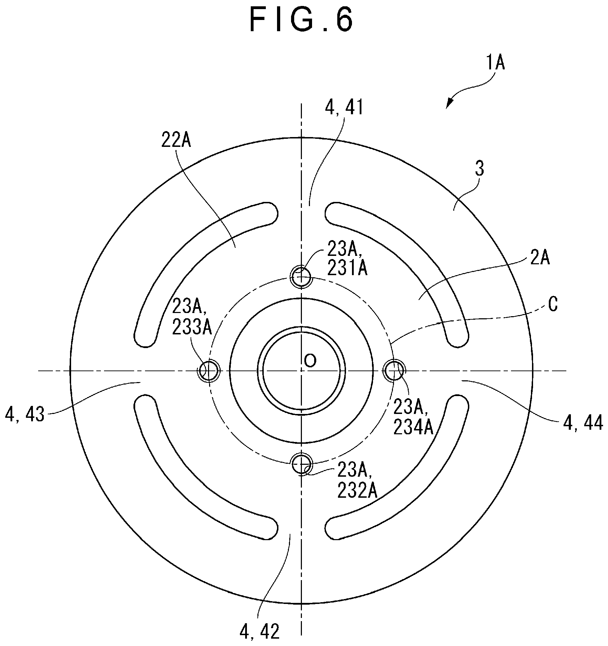

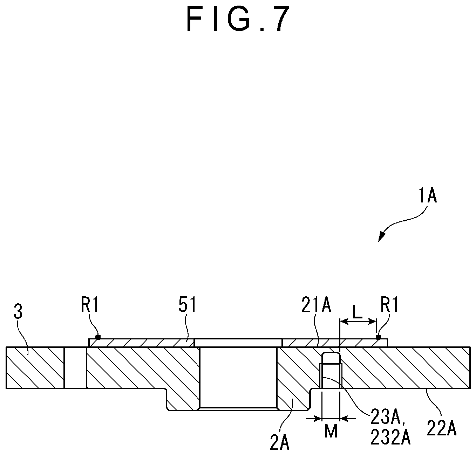

It should be noted that components in the second exemplary embodiment that are the same or similar as those in the first exemplary embodiment are denoted by the same reference numerals to omit detailed description thereof. Fig. 5 is a plan view schematically showing a torque sensor 1A of the exemplary embodiment. Fig. 6 is a plan view schematically showing the torque sensor 1A viewed from an opposite side to a side shown in Fig. 5. Fig. 7 is a cross-sectional view schematically showing the torque sensor 1A cut along a VII-VII line in Fig. 5.

As shown in Figs. 5 to 7, the torque sensor 1A includes a first area 2A, the second area 3, the beams 4, and the detector 5.

### First Area 2A

The first area 2A is a metallic annular part similar to the above-described first area 2 of the first exemplary embodiment. The first area 2A has a first surface 21A and a second surface 22A opposite the first surface 21A.

The second surface 22A of the first area 2A is provided with screw holes 23A. In the exemplary embodiment, four screw holes 23A, namely, a first screw hole 231A, a second screw hole 232A, a third screw hole 233A, and a fourth screw hole 234A are formed. Fasteners such as bolts can be screwed into the respective screw holes 231A, 232A, 233A, and 234A.

In the exemplary embodiment, the screw holes 231A, 232A, 233A, and 234A are formed in a manner not to reach the first surface 21A. However, the screw holes 231A, 232A, 233A, and 234A are not limited to the above form, but may be formed in a manner to reach the first surface 21A.

In the exemplary embodiment, the screw holes 231A, 232A, 233A, and 234A are arranged symmetrically to the beams 4 in a plan view in the same manner as described above in the first exemplary embodiment.

Further, the screw holes 231A, 232A, 233A, and 234A are arranged at regular intervals on the imaginary circle C centered at the center O.

### Forming Method of Screw Holes 23A and Detection Accuracy of Torque

Next, a forming method of the screw holes 23A and detection accuracy of torque will be described.

As described above, the screw holes 231A, 232A, 233A, and 234A are formed in the second surface 22A of the first area 2A.

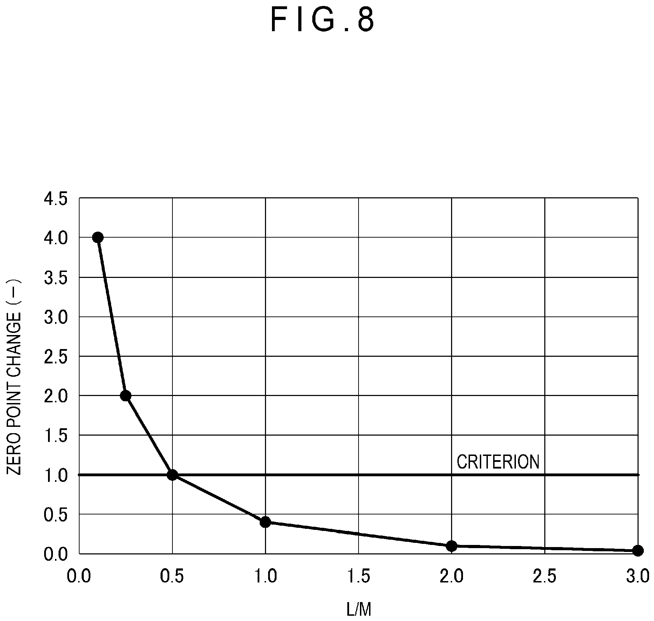

Here, the screw holes 231A, 232A, 233A, and 234A are formed so that a distance L in an extension direction of the first surface 21A between the resistors R1, R2 of each of the strain gauges 52 and a periphery of the corresponding one of the screw holes 231A, 232A, 233A, and 234A is equal to or more than a half of a diameter M of each of the screw holes 231A, 232A, 233A, and 234A, preferably equal to or more than (the same size as) the diameter M. Fig. 8 shows a relationship between a zero point change rate of the strain gauges 52 and a ratio between the diameter M of each of the screw holes 231A, 232A, 233A, and 234A and the distance L, in which the distance L is defined between the resistors R1, R2 of each of the strain gauges 52 and a periphery of the corresponding one of the screw holes 231A, 232A, 233A, and 234A. It should be noted that Fig. 8 shows the zero point change rate assuming that a criterion is defined as 1.

Fig. 8 shows test results of the zero point change rate obtained when bolts have been screwed into the respective screw holes 231A, 232A, 233A and 234A each having a diameter of about 3 to 5 mm.

As shown in Fig. 8, it is suggested that, when L/M is smaller than 0.5 (1/2), the zero point change rate of the strain gauges 52 exceeds the criterion upon screwing of the fasteners (e.g., bolts) into the screw holes 231A, 232A, 233A and 234A. It is suggested that the zero point change rate can be kept equal to or less than the criterion by rendering L/M equal to or more than 0.5 (1/2) and can be kept lower by rendering L/M equal to 1 (same size).

Accordingly, it follows that it is suggested that a decrease in the detection accuracy of torque, which is caused by screwing the fasteners into the respective screw holes 231A, 232A, 233A and 234A, can be inhibited by rendering L/M equal to or more than 0.5 (1/2), preferably equal to 1 (same size).

The following advantages can be achieved by the above-described exemplary embodiment.

(4) In the exemplary embodiment, the second surface 22A of the first area 2A is provided with the screw holes 23A into which the fasteners such as bolts are screwed. The distance L in an extension direction of the first surface 21A between the resistors R1, R2 of each of the strain gauges 52 and the periphery of the corresponding one of the screw holes 23A is equal to or more than the half of the diameter M of each of the screw holes 23. This makes it possible for strain caused by screwing the fasteners into the respective screw holes 23A not to be easily transmitted to the detector 5 upon the screwing of the fasteners into the respective screw holes 23A. Therefore, even with the arrangement in which the first area 2A has the screw holes 23A, the detection accuracy of torque can be inhibited from decreasing. (5) In the exemplary embodiment, since the distance L in an extension direction of the first surface 21A between each of the strain gauges 52 and the periphery of the corresponding one of the screw holes 23A is preferably equal to the diameter M of each of the screw holes 23, a decrease in the detection accuracy of torque can be reliably inhibited even with the arrangement in which the first area 2A is provided with the screw holes 23A.

### Modifications

It should be noted that the invention is not limited to the above-described embodiments but includes modifications, improvements, and the like as long as an object of the invention can be achieved.

In each of the above exemplary embodiments, the second area 3 is arranged around the first area 2A. The invention, however, is not limited to this arrangement. For instance, the second area may be arranged on an inner side of the first area. That is, the first area arranged around the second area may be provided with the detector and the screw holes. In this arrangement, the second area arranged on the inner side of the first area is fixed to a fixed component by the fasteners (e.g., bolts) or the like.

In each of the above exemplary embodiments, the number of the screw holes 23, 23A is four. The invention, however, is not limited to this number. For instance, eight screw holes may be provided as long as the number of the screw holes is an integral multiple of the number of the beams. Further, the invention also encompasses a case where the number of the screw holes is not an integral multiple of the number of the beams.

In each of the above exemplary embodiments, the shape of the first area 2, 2A is annular. The invention, however, is not limited to this shape. For instance, the shape of the first area may be rectangular or a cross-shape in a plan view.

In each of the above exemplary embodiments, the shape of the second area 3 is annular. The invention, however, is not limited to this shape. For instance, the second area may be in a form of an angular ring or the like as long as the second area encircles the first area. Further, the second area may be provided with a concave and/or convex portion(s) dented or protruded in a thickness direction.

In each of the above exemplary embodiments, the number of the beams 4 is four. The invention, however, is not limited to this number. For instance, five or more beams or three or less beams may be provided. In other words, it is only necessary that a plurality of beams are provided. Further, paired ones of the beams are not necessarily provided at positions opposite to each other across the first area.

In each of the above exemplary embodiments, the end near the first area 2, 2A and the end near the second area 3 of the beam 41, 42, 43, 44 are wider than the center portion thereof. The invention, however, is not limited to this width. For instance, the beams may be formed to have the same width at the ends and the center portion. Further, the beams may be provided with a concave and/or convex portion(s) as long as the beams connect the first area with the second area.

In each of the above exemplary embodiments, the insulation film 51 includes a plurality of layers. The invention, however, is not limited to this arrangement. For instance, the insulation film may be formed by a single insulation layer.

In each of the above exemplary embodiments, the detector 5 includes the insulation film 51 and the strain gauges 52. The invention, however, is not limited to this arrangement. For instance, the detector may have a protection film with which the strain gauges are covered.

In each of the above exemplary embodiments, the resistors R1 and R2 are formed by printing. The invention, however, is not limited thereto. For instance, the resistors may be formed by vapor deposition or sputtering, or may be attached to the insulation film.

In each of the above exemplary embodiments, the insulation film 51 is layered so as to cover a substantially entire surface of the first area 2, 2A. The invention, however, is not limited to this arrangement. For instance, the insulation film may be layered to cover a part of the first area as long as the insulation film is layered at least on the part provided with the strain gauges, the conductor, and the electrodes. In other words, it is only necessary for the insulation film to be provided so that the strain gauges, the conductor, and the electrodes are insulated from the first area.

In each of the above exemplary embodiments, the sensor may include a plurality of bridge circuits each provided with the strain gauge (e.g. a first bridge circuit and a second bridge circuit). Further, the sensor may include a determiner configured to determine whether a difference between outputs of the first bridge circuit and the second bridge circuit exceeds a predetermined threshold.

In such an arrangement, when failure occurs in any of the first bridge circuit and the second bridge circuit each provided with the strain gauge, the failure can be detected.

In each of the above exemplary embodiments, the strain gauges 52 are provided on the first area 2, 2A. The invention, however, is not limited to this arrangement. For instance, the strain gauges may be provided on the beams.

In each of the above exemplary embodiments, the torque sensor 1 is installed at a joint portion of a robot or the like. The invention, however, is not limited thereto. For instance, the torque sensor may be installed in transportation machines (e.g. vehicles), or industrial machines (e.g. processing machines). The torque sensor is applicable to a portion, to which torque is applied, of a component in a variety of fields.

## Claims

1. A torque sensor (1) comprising:
a first area (2) comprising a first surface (21) and a second surface (22) opposite the first surface (21);
a second area (3) provided around the first area (2) or on an inner side of the first area (2);
a plurality of beams (4) connecting the first area (2) to the second area (3);
and
a detector (5) provided on the first surface (21) of the first area (2) and configured to detect torque applied between the first area (2) and the second area (3), wherein
the detector (5) comprises: an insulation film (51) layered on the first area (2); and strain gauges (52) layered on the insulation film (51) and being deformable in response to the torque,
the second surface (22) of the first area (2) is provided with screw holes (23) that do not reach the first surface (21) and into which fasteners are respectively screwed, and
a thickness defined between a bottom of each of the screw holes (23) and the first surface (21) is equal to or more than one fourth of a diameter (M) of each of the screw holes (23).

2. The torque sensor (1) according to claim 1, wherein
the thickness (H) defined between the bottom of each of the screw holes (23) and the first surface (21) is equal to or more than a half of the diameter (M) of each of the screw holes (23).

3. A torque sensor (1A) comprising:
a first area (2A) comprising a first surface (21A) and a second surface (22A) opposite the first surface (21A);
a second area (3) provided around the first area (2A) or on an inner side of the first area (2A);
a plurality of beams (4) connecting the first area (2A) to the second area (3); and
a detector (5) provided on the first surface (21A) of the first area (2A) and configured to detect torque applied between the first area (2A) and the second area (3), wherein
the detector (5) comprises: an insulation film (51) layered on the first area (2A); and strain gauges (52) layered on the insulation film and being deformable in response to the torque,
the second surface (22A) of the first area (2A) is provided with screw holes (23A) into which fasteners are respectively screwed, and
a distance (L) in an extension direction of the first surface (21A) between each of the strain gauges (52) and a periphery of the corresponding one of the screw holes (23A) is equal to or more than a half of a diameter (M) of each of the screw holes (23A).

4. The torque sensor (1A) according to claim 3, wherein
the distance (L) in the extension direction of the first surface (21A) between each of the strain gauges (52) and the periphery of the corresponding one of the screw holes (23A) is equal to or more than the diameter of each of the screw holes.

5. The torque sensor (1) according to claim 1 or 2, wherein
the number of the screw holes (23) is an integral multiple of the number of the beams, and
the screw holes (23) are arranged symmetrically to the beams in a plan view.
